# EUROPÄISCHE PATENTSCHRIFT

(11) **EP 0 889 553 B1**
(45) Veröffentlichungstag und Bekanntmachung des Hinweises auf die Patenterteilung: **20.12.2006**
(21) Anmeldenummer: 98112353.2
(22) Anmeldetag: 03.07.1998
(51) Int. Cl.: H01R 13/585, H01R 13/512, H01R 4/50, G02B 6/38, H01R 13/59

(54) **Steckverbinder**
Connector
Connecteur

(30) Priorität: 03.07.1997 DE 19728506
(43) Veröffentlichungstag der Anmeldung: 07.01.1999
(73) Patentinhaber: PHOENIX CONTACT GmbH & Co. Kg, 32825 Blomberg (DE)
(72) Erfinder: Metzger, Andreas, 32765 Detmold (DE); Nordhoff, Andreas, 32805 Horn-Bad Meinberg (DE)
(74) Vertreter: Gesthuysen, von Rohr & Eggert

(56) Entgegenhaltungen:
- EP-A- 0 131 705
- EP-A- 0 577 035
- DE-C- 961 904
- DE-C- 3 220 006
- GB-A- 2 297 205
- US-A- 5 599 202

## Beschreibung

Die Erfindung betrifft einen Steckverbinder, mit einem vorzugsweise zylinderförmigen Kontaktträger, mit einer vorzugsweise auf den Kontaktträger aufschraubbaren Überwurfhülse, mit mindestens einem von dem Kontaktträger getragenen Kontaktelement und mit mindestens einem Zugentlastungselement, wobei der Kontaktträger zur Aufnahme mindestens einer Leitung mindestens eine in Leitungsanschlußrichtung verlaufende Ausnehmung aufweist.

Steckverbinder der Art, von denen die Verbindung ausgeht, sind beispielsweise aus der DE 31 50 568 C1 und der DE 32 20 006 C1 bekannt. Bei diesen bekannten Steckverbindern ist als Zugentlastungselement ein zwischen dem Kontaktträger und der Überwurfhülse angeordneter Dichtungs- und Zugentlastungsring bekannt, der durch Aufschrauben der mit einem Innengewinde versehenen Überwurfhülse über einen in der Überwurfhülse vorhandenen Wulst im Einführungsbereich des eine Mehrzahl von Leitungen führenden Kabels gegen die Oberfläche des Kabels sowie gegen die rückwärtige Stirnfläche des Kontaktträgers gepreßt wird und so einen Reibschluß zwischen Kabel und Steckverbinder erzeugt. Bekannt ist es auch, einen ringförmigen Druckkörper vorzusehen, dessen Außendurchmesser etwa dem Innendurchmesser der Überwurfhülse und dessen Innendurchmesser etwa dem Außendurchmesser des eine Mehrzahl von Leitungen führenden Kabels entspricht, wobei dieser Druckkörper an seinem von dem Kontaktträger abgewandten Ende gefiedert ist, so daß er nach dem Aufschrauben der Überwurfhülse durch deren zur Kabeleintrittsseite hin konisch zulaufenden Innenwand um einen solchen Betrag zusammengepreßt werden kann, daß er einen elastischen Ring gegen das Kabel preßt und somit wiederum für einen Reibschluß zwischen Kabel und Steckverbinder sorgt.

Der Kontaktträger der bekannten Steckverbinder weist mehrere Ausnehmungen zur Aufnahme jeweils einer Leitung auf, wobei in jeder Ausnehmung eine Schneidklemme zur Kontaktierung der jeweiligen Leitung angeordnet ist. Die Überwurfhülse ist bei den bekannten Steckverbindern so ausgestaltet, daß beim Aufschrauben der Überwurfhülse auf den Kontaktträger die auf den Stirnseiten der Schneidklemmen jeweils aufliegenden Leitungen in die Schneidklemmen eingedrückt und somit kontaktiert werden. Dabei weist der aus der DE 32 20 006 C1 bekannte Druckkörper an seinem dem Kontaktträger zugewandten Ende den Ausnehmungen zugeordnete Finger auf, die so geformt sind, daß sie sich um einen gewissen Betrag elastisch eindrücken lassen. Hier erfolgt also das Eindrücken der Leitungen in die Schneidklemmen nicht unmittelbar über das Innengewinde der Überwurfhülse, sondern mittelbar über die elastisch von dem Innengewinde eingedrückten Finger des Druckkörpers.

Die aus dem Stand der Technik bekannten Maßnahmen zur Zugentlastung des Kabels sind notwendig, da die an für sich vorteilhafte Kontaktierung der Leitungen eines Kabels mittels Schneidklemmen nicht für Zugbelastungen ausgelegt ist. Tritt an einer mittels einer Schneidklemme kontaktierten Leitung eine Zugbelastung auf, so führt dies dazu, daß die Leitung abisoliert wird, da die Schneidklemme einen großen Teil der Ummantelung der Leitung durchtrennt. Die somit notwendigen, im Stand der Technik vorgeschlagenen Maßnahmen zur Zugentlastung sind nun insbesondere dahingehend problematisch, daß sie einerseits zusätzliche, auf das Kabel aufzuschiebende Bauteile zur Zugentlastung erfordern, die die Konfektionierung der Kabel erschweren, und daß sie andererseits die Zugentlastung an der Außenseite des Kabels angreifen lassen, was zu einer Vergrößerung des Außendurchmessers des Steckverbinders über den aus sonstigen Gründen notwendigen Durchmesser hinaus führt.

Der Erfindung liegt somit die Aufgabe zugrunde, die aus dem Stand der Technik bekannten Steckverbinder dahingehend auszugestalten und weiterzubilden, daß die Zugentlastungselemente derart ausgebildet sind, daß sie eine möglichst einfache und schnelle Konfektionierung von an den Steckverbinder angeschlossenen Kabeln bei einer gleichzeitig reduzierten Baugröße ermöglichen.

Erfindungsgemäß ist die zuvor hergeleitete und aufgezeigte Aufgabe dadurch gelöst, daß die Zugentlastungselemente an den Längsseiten der Ausnehmungen angeordnet sind und jeweils mindestens eine in die jeweilige Ausnehmung hineinragende, mindestens in eine Ummantelung einer in die Ausnehmung eingebrachten Leitung eindringende Spitze aufweisen. Die derart ausgebildeten Zugentlastungselemente eines erfindungsgemäßen Steckverbinders ermöglichen nun eine schnelle und problemlose Konfektionierung des zugehörigen Kabels allein durch Aufschieben oder Aufschrauben der Überwurfhülse, wodurch die Spitzen der Zugentlastungselemente in die Ummantelung der Leitung eindringen und die Zugentlastung gewährleisten. Da die Zugentlastungselemente erfindungsgemäß in der ohnehin vorgesehenen Ausnehmung zur Aufnahme der Leitungen liegen, kann der Außendurchmesser des erfindungsgemäßen Steckverbinders beispielsweise bis auf den Durchmesser des die Leitungen umfassenden Kabels reduziert werden. Die in die Ummantelung der Leitungen eindringenden Spitzen sorgen für eine hinreichende Zugentlastung, da die Ummantelung bis auf einen Punkt unversehrt bleibt und die Gefahr eines Abisolierens der Leitung bei Zugbelastung, wie etwa bei Schneidklemmen, nicht besteht.

Die Zugentlastungswirkung der Zugentlastungselemente kann dadurch weiter vergrößert werden, daß die Zugentlastungselemente jeweils mehrere Spitzen mit in Montagerichtung der Überwurfhülse zunehmender Länge aufweisen. Die Zunahme der Länge der Spitzen ist dahingehend vorteilhaft, daß das Aufschrauben oder Aufstekken der Überwurfhülse hierdurch vereinfacht wird. Daß mehrere in die Ummantelung einer Leitung eingedrungene Spitzen die Möglichkeit einer höheren Kraftaufnahme geben, bedarf keiner besonderen Erläuterung.

Bei gleichbleibender Anzahl von Spitzen je Zugentelastungselement läßt sich die Zugentlastungswirkung weiter dadurch verbessern, daß mindestens ein Teil der Spitzen der Zugentlastungselemente nach Art eines Widerhakens entgegen der Zugrichtung hinterschnitten sind. Eine derartige Ausgestaltung der Spitzen der Zugentlastungselemente ist insbesondere bei Ummantelungen mit einer textilen Struktur vorteilhaft, da sich in einem solchen Fall die Spitzen in dem Ummantelungsmaterial verhaken können.

Eine im Hinblick auf die Montage und Herstellung des erfindungsgemäßen Steckverbinders besonders einfache Ausgestaltung ist dadurch gewährleistet, daß die Zugentlastungselemente bei einem zylinderförmigen Kontaktträger an einer, der Zylinderachse zugewandten Längsseite der jeweiligen Ausnehmung angeordnet sind.

Da die bekannte Kontaktierung der Leitungen mittels Schneidklemmen in Umfangsrichtung der Leitungen relativ viel Platz in Anspruch nimmt, ist der erfindungsgemäße Steckverbinder vorteilhaft dadurch ausgestaltet, daß das Kontaktelement zur Kontaktierung der Leitung eine in Längsrichtung in die Leitung eindringende Kontaktspitze aufweist. Dieses axiale Kontaktelement ermöglicht im Vergleich zur Kontaktierung mit Schneidklemmen eine weitere Verringerung des Durchmessers des erfindungsgemäßen Steckverbinders.

Um die Positionierung der Leitung, im Falle einer elektrischen Leitung relativ zur Kontaktspitze und im Falle eines Lichtwellenleiters relativ zu den Enden des Lichtwellenleiters gegenüberliegenden optischen Elementen, zu verbessern, ist der erfindungsgemäße Steckverbinder dadurch ausgestaltet, daß an dem den Kontaktelementen zugewandten Ende einer Ausnehmung eine an den Querschnitt der Leitung angepaßte Vertiefung vorgesehen ist. Diese Vertiefung bewirkt eine Führung der Leitung derart, daß sie optimal an ihr Gegenstück im Steckverbinder herangeführt wird.

Werden gemäß einer weiteren Ausgestaltung der Erfindung die Zugentlastungselemente seitlich in in Leitungsanschlußrichtung verlaufende Montageausnehmungen des Kontaktträgers eingelegt und sind diese im montierten Zustand des Steckverbinders durch die Überwurfhülse und die Leitungen gesichert, so ergibt sich eine besonders einfache und kostengünstige Herstellung des erfindungsgemäßen Steckverbinders.

Eine vergleichbare Maßnahme zur weiteren Vereinfachung der Herstellung des erfindungsgemäßen Steckverbinders besteht darin, daß auch die Kontaktelemente seitlich in in Leitungsanschlußrichtung verlaufende Montageausnehmungen im Kontaktträger einlegbar sind und im montierten Zustand des Steckverbinders durch die Überwurfhülse gesichert sind.

Dadurch, daß die Kontaktelemente und/oder die Zugentlastungselemente in Leitungsanschlußrichtungen Anschlagflächen aufweisen und durch zugeordnete Anschlagflächen der jeweiligen Montageausnehmungen des Kontaktträgers in Leitungsanschlußrichtung gesichert sind, ist gewährleistet, daß die Kontaktelemente und die Zugentlastungselemente die angreifenden Kräfte durch Formschluß in den Kontaktträger einleiten können, ohne daß diese beispielsweise im Kontaktträger vergossen sind.

Besonders vorteilhaft insbesondere für die Kontaktierung von elektrischen Leitungen ist eine Ausgestaltung des erfindungsgemäßen Steckverbinders, bei der die jeweils einer Leitung zugeordneten Kontaktelemente und Zugentlastungselemente einstückig ausgeführt sind. Dies vereinfacht einerseits die Herstellung des erfindungsgemäßen Steckverbinders weiter und gibt andererseits die Möglichkeit, die Kontaktierung der elektrischen Leitung entweder über die in die Ummantelung und den elektrischen Leiter eindringenden Spitzen zu verbessern oder alleine über diese Spitzen herzustellen.

Im einzelnen gibt es nun eine Vielzahl von Möglichkeiten den erfindungsgemäßen Steckverbinder auszugestalten und weiterzubilden. Hierzu wird verwiesen einerseits auf die dem Patentanspruch 1 nachgeordneten Patentansprüche, andererseits auf die Beschreibung eines bevorzugten Ausführungsbeispiels in Verbindung mit der Zeichnung. In der Zeichnung zeigt
- Fig. 1: eine perspektivische Ansicht eines Kontaktträgers eines Ausführungsbeispiels eines erfindungsgemäßen Steckverbinders,
- Fig. 2: eine perspektivische Ansicht des Ausführungsbeispiels eines erfindungsgemäßen Steckverbinders mit einem angeschlossenen Kabel und mit einer abgenommenen Überwurfhülse,
- Fig. 3: eine perspektivische Ansicht des Ausführungsbeispiels eines erfindungsgemäßen Steckverbinders im montierten Zustand mit zur Vereinfachung der Darstellung gekürzten Leitungen,
- Fig. 4: eine perspektivische Ansicht des Ausführungsbeispiels eines erfindungsgemäßen Steckverbinders komplett montiert und
- Fig. 5: eine perspektivische Ansicht eines kombinierten Kontakt- und Zugentlastungselementes des Ausführungsbeispiels eines erfindungsgemäßen Steckverbinders.

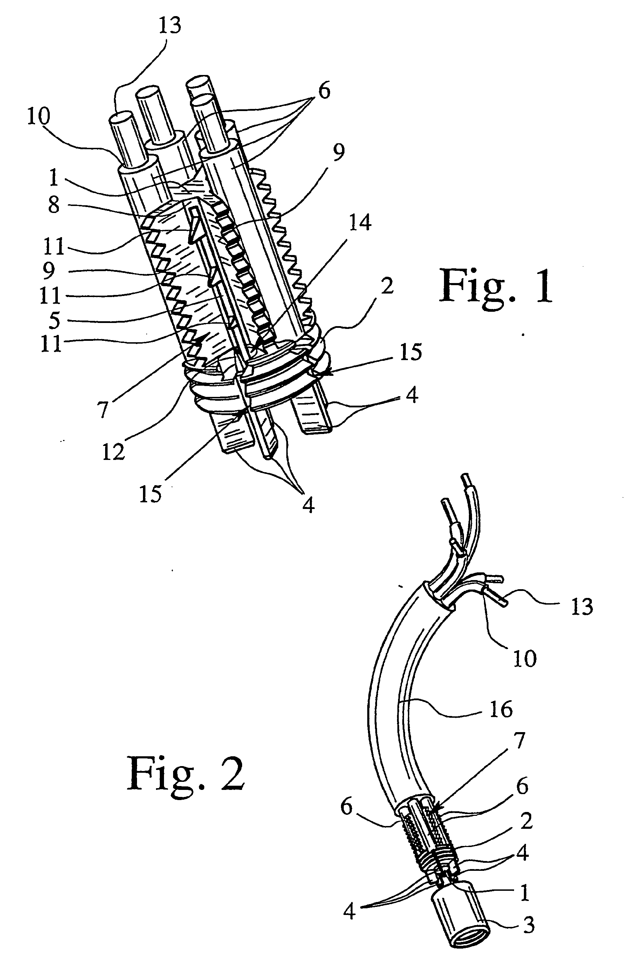

In Fig. 1 ist ein Kontaktträger 1 eines Ausführungsbeispiels eines erfindungsgemäßen Steckverbinders in perspektivischer Ansicht dargestellt. Der Kontaktträger 1 weist im Ausführungsbeispiel ein Außengewinde 2 auf, auf das eine in Fig. 2 dargestellte Überwurfhülse 3 aufschraubbar ist. Statt der auch aus dem Stand der Technik bekannten Schraubverbindung zwischen der Überwurfhülse 3 und dem Kontaktträger 1 ist es bei einem nicht dargestellten Ausführungsbeispiel gleichfalls denkbar, daß die Überwurfhülse auf den Kontaktträger lediglich aufgeschoben wird und in der Endstellung verrastet. Diese Alternative ist insbesondere für den Fall denkbar, daß beim Aufschieben der Überwurfhülse auf den Kontaktträger nur geringe Kräfte auftreten.

Der in Fig. 1 dargestellte Kontaktträger 1 trägt insgesamt fünf Kontaktelemente 4 und fünf Zugentlastungselemente 5, wobei von den letzteren in der Darstellung in Fig. 1 nur ein einziges sichtbar ist. Wie in Fig. 1 deutlich zu erkennen, weist der Kontaktträger 1 zur Aufnahme von insgesamt fünf Leitungen 6, von denen in Fig. 1 nur vier dargestellt sind, fünf in Leitungsanschlußrichtung verlaufende Ausnehmungen 7 auf.

In Fig. 1 ist anhand des dargestellten Zugentlastungselementes 5 deutlich zu erkennen, daß dieses in einer Ausnehmung 7 an einer der Längsseiten 8, 9 der Ausnehmung 7 angeordnet ist und insgesamt drei in diese Ausnehmung 7 hineinragende, bei in die Ausnehmung 7 eingebrachter Leitung 6 in eine Ummantelung 10 einer Leitung 6 eindringende Spitzen 11 aufweist.

Die in Fig. 1 dargestellten Spitzen 11 weisen eine mit in Montagerichtung der nicht dargestellten Überwurfhülse deutlich zunehmende Länge auf. Die dargestellten Spitzen 11 sind im Ausführungsbeispiel eines erfindungsgemäßen Steckverbinders nicht als Widerhaken ausgebildet, sondern bilden von der Seite betrachtet ein gleichschenkliges Dreieck, bei dem die Seiten gleicher Länge einen Winkel von ungefähr 25° einschließen.

Bei dem in Fig. 1 dargestellten Ausführungsbeispiel sind die Zugentlastungselemente 5 jeweils an einer der Achse des Kontaktträgers 1 zugewandten Längsseite 8 des Kontaktträgers 1 angeordnet. Bei einer derartigen Anordnung wird die jeweilige Leitung 6 beim Aufschrauben der nicht dargestellten Überwurfhülse senkrecht auf die Spitzen 11 gepreßt. Alternativ, aber hier nicht dargestellt, ist beispielsweise denkbar, daß ein oder mehrere Zugentlastungselemente in den den benachbarten Ausnehmungen 7 zugewandten Längsseiten 9 angeordnet sind. In diesem Fall würde die jeweilige Leitung 6 beim Einschrauben der in Fig. 1 nicht dargestellten Überwurfhülse unter einen Winkel auf die gemäß der nicht dargestellten Alternative vorgesehenen Zugentlastungselemente gepreßt.

Bei dem in der Fig. 1 dargestellten Ausführungsbeispiel ist der Kontaktträger 1 derart ausgebildet, daß die Ausnehmungen 7 umfangsseitig offen sind. Es ist jedoch ebenfalls denkbar, daß die Umfangsseite der Ausnehmungen 7 durch einen nicht dargestellten, beispielsweise einstückig mit dem Kontaktträger 1 ausgeführten, in radialer Richtung elastischen Finger abgedeckt sind. Durch eine solche Maßnahme würde die durch das Aufschrauben der in Fig. 1 nicht dargestellten Überwurfhülse auf den Kontaktträger 1 durch Reibung des Gewindes der nicht dargestellten Überwurfhülse 3 an der Ummantelung 10 einer Leitung 6 entstehende Kraftkomponente, die ein ordnungsgemäßes Eindringen der Spitzen 11 in die Ummantelung 10 beeinträchtigen kann, stark verringert.

Die Kontaktelemente 4 des in Fig. 1 dargestellten Ausführungsbeispiels weisen zur Kontaktierung der jeweiligen Leitung 6 eine in Längsrichtung in die Leitung 6 eindringende Kontaktspitze 12 auf. Das Einlegen einer Leitung 6 in eine Ausnehmung 7 erfolgt bei dem dargestellten Ausführungsbeispiel also derart, daß zunächst der Leiter 13 der Leitung 6 auf die Kontaktspitze 12 des Kontaktelementes 4 geschoben wird und anschließend die jeweilige Leitung 6 in die zugehörige Ausnehmung 7, insbesondere durch Aufschrauben der in Fig. 1 nicht dargestellten Überwurfhülse gepreßt wird.

Um das Aufstecken einer Leitung 6 auf eine Kontaktspitze 12 zu vereinfachen, ist in dem Kontaktträger 1 an dem den Kontaktelementen 4 zugewandten Ende jeder Ausnehmung eine an den Querschnitt der Leitungen 6 angepaßte Vertiefung 14 vorgesehen.

In Fig. 1 ist weiter zu erkennen, daß in dem Kontaktträger 1 seitlich in Leitungsanschlußrichtung verlaufende Montageausnehmungen 15 vorgesehen sind, in die die Kontaktelemente 4 und die Zugentlastungselemente 5 einlegbar sind, wobei die Zugentlastungselemente 5 im montierten Zustand des Steckverbinders durch die in Fig. 1 nicht dargestellte Überwurfhülse und die jeweiligen Leitungen 6 und die Kontaktelemente 4 durch die Überwurfhülse allein in radialer Richtung gesichert sind. Zur Aufnahme insbesondere an den Kontaktelementen 4 angreifender, radial nach außen wirkender Kräfte sind also keine besonderen Maßnahmen bei der Befestigung der Kontaktelemente 4 in der Montageausnehmung 15 notwendig.

Fig. 2 zeigt eine perspektivische Ansicht des Ausführungsbeispiels eines erfindungsgemäßen Steckverbinders, wobei hier gegenüber der Darstellung in Fig. 1 einerseits die Überwurfhülse 3 dargestellt ist und andererseits in sämtliche Ausnehmungen 7 des Kontaktträgers 1 alle fünf Leitungen 6 eines Kabels 16 eingelegt sind, so daß lediglich noch die Überwurfhülse 3 auf den Kontaktträger 1 aufzuschrauben ist.

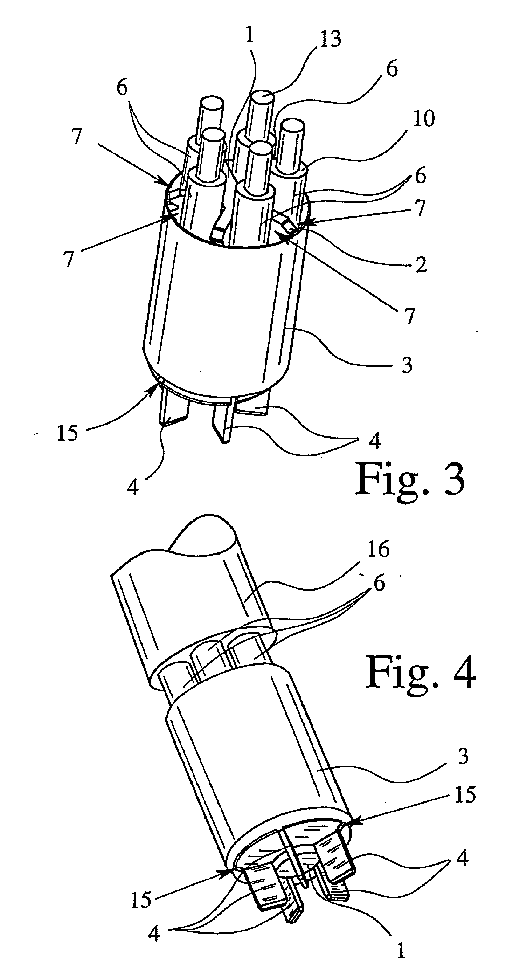

In Fig. 3 ist das Ausführungsbeispiel eines erfindungsgemäßen Steckverbinders mit aufgeschraubter Überwurfhülse 3 aus Richtung der abgehenden Leitungen 6 dargestellt.

Auch Fig. 4 zeigt das Ausführungsbeispiel eines erfindungsgemäßen Steckverbinders mit aufgeschraubter Überwurfhülse 3, jedoch aus der Richtung der Kontaktelemente 4 und mit angeschlossenem Kabel 16. In Fig. 4 ist, wie in Fig. 2, besonders deutlich zu erkennen, daß das Ausführungsbeispiel eines erfindungsgemäßen Steckverbinders einen Außendurchmesser aufweist, der dem des Kabels 16 entspricht. Eine derart kompakte Ausführung des Steckverbinders war im Stand der Technik bislang nicht denkbar.

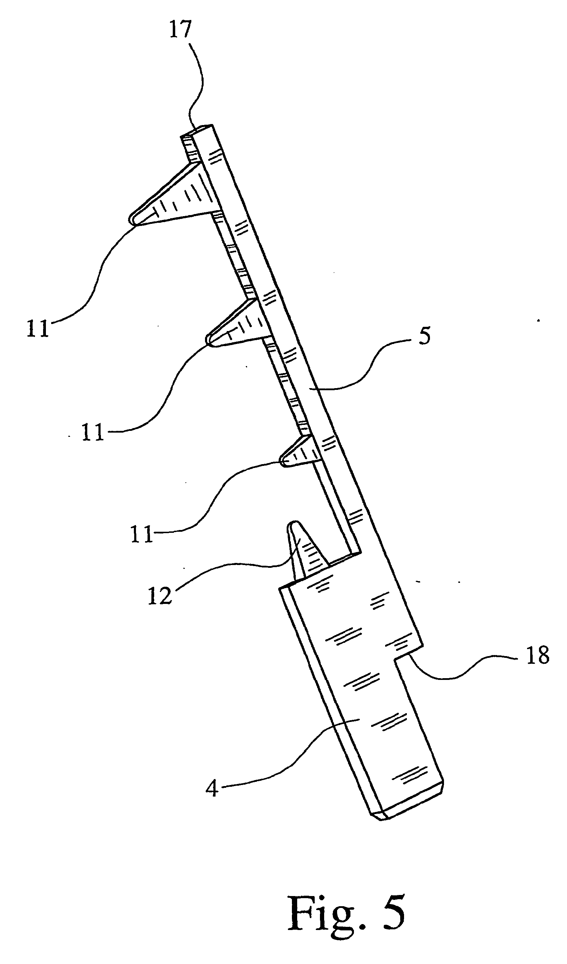

In Fig. 5 ist schließlich dargestellt, was in den Fig. 1 bis 4 nicht erkennbar ist, daß die jeweils einer hier nicht dargestellten Leitung zugeordneten Kontaktelemente 4 und Zugentlastungselemente 5 einstückig ausgeführt sind. Dies ist einerseits bei der Herstellung des erfindungsgemäßen Steckverbinders von Vorteil, da die Anzahl der Teile reduziert wird, und andererseits auch in elektrischer Hinsicht von Vorteil, da zumindest die längste der Spitzen 11, in der Fig. 5 am oberen Ende des Zugentlastungselementes 5 angeordnet, nicht nur in die Ummantelung bzw. Isolierung der hier nicht dargestellten Leitung eindringt, sondern darüber hinaus bis in den Leiter der Leitung eindringt und somit den elektrischen Kontakt entweder alleine herstellen kann oder, wie bei dem dargestellten Ausführungsbeispiel, den über die Kontaktspitze 12 hergestellten elektrischen Kontakt verbessert. Selbstverständlich darf die längste Spitze 11 für den Fall, daß der Steckverbinder Leitungen in Form von Lichtwellenleitern aufnimmt, nicht durch die Ummantelung der Leitung bis in den Lichtwellenleiter vordringen, da das Lichtsignal ansonsten durch eine Zerstörung des Lichtwellenleiters zumindest übermäßig bedämpft würde.

In Fig. 5 ist weiter erkennbar, daß die einstückige Ausführung des Kontaktelementes 4 und des Zugentlastungselementes 5 Anschlagflächen 17 und 18 in Kabelanschlußrichtung aufweisen, die mit nicht dargestellten, in der jeweiligen, insbesondere in Fig. 1 erkennbaren Montageausnehmung 15 vorgesehenen, zugeordneten Anschlagflächen derart zusammenwirkt, daß die einstückig ausgeführten Kontaktelemente 4 und Zugentlastungselemente 5 in Leitungsanschlußrichtung formschlüssig gesichert sind. Aufgrund der formschlüssigen Sicherung der einstückig ausgeführten Kontaktelemente 4 und Zugentlastungselemente 5 sowohl in radialer Richtung durch die in Fig. 5 nicht dargestellte Überwurfhülse als auch in Leitungsanschlußrichtung durch die Anschlagflächen 17, 18, ist eine optimale Herstellung des erfindungsgemäßen Steckverbinders gewährleistet, bei der zwischen dem Kontaktträger 1 und den einstückig ausgeführten Kontaktelementen 4 und Zugentlastungselementen 5 nur ein geringer Reibschluß innerhalb der Montageausnehmungen 15 vorhanden sein muß, so daß diese nach der Herstellung des Kontaktträgers 1 lediglich in die Montageausnehmungen 15 eingelegt werden können.

## Patentansprüche

1. Steckverbinder, mit einem zylinderförmigen Kontaktträger (1), mit einer auf den Kontaktträger (1) aufschraubbaren oder aufschiebbaren Überwurfhülse (3), mit mindestens einem von dem Kontaktträger (1) getragenen Kontaktelement (4) und mit mindestens einem Zugentlastungselement (5), wobei der Kontaktträger (1) zur Aufnahme mindestens einer Leitung (6) mindestens eine in Leitungsanschlußrichtung verlaufende Ausnehmung (7) aufweist, wobei das Zugentlastungselement (5) an mindestens einer der Längsseiten (8, 9) der Ausnehmung (7) angeordnet ist
**dadurch gekennzeichnet, daß** das Zugentlastungselement (5)
jeweils mindestens eine in die Ausnehmung (7) hineinragende, mindestens in eine Ummantelung (10) einer in die Ausnehmung eingebrachten Leitung (6) eindringende Spitze (11) aufweist, und die Überwurfhülse (3) seitens des Kontaktelements (4) auf den Kontaktträger (1) aufbringbar ist.

2. Steckverbinder nach Anspruch 1, **dadurch gekennzeichnet, daß** die Zugentlastungselemente (5) jeweils mehrere Spitzen (11) mit in Montagerichtung der Überwurfhülse (3) zunehmender Länge aufweisen.

3. Steckverbinder nach Anspruch 1 oder 2, **dadurch gekennzeichnet, daß** mindestens ein Teil der Spitzen (11) der Zugentlastungselemente (5) nach Art eines Widerhakens entgegen der Zugrichtung hinterschnitten sind.

4. Steckverbinder nach einem der Ansprüche 1 bis 3, **dadurch gekennzeichnet, daß** die Zugentlastungselemente (5) bei einem zylinderförmigen Kontaktträger (1) an einer, der Zylinderachse zugewandten Längsseite (8) der jeweiligen Ausnehmung (7) angeordnet sind.

5. Steckverbinder nach einem der Ansprüche 1 bis 4, **dadurch gekennzeichnet, daß** das Kontaktelement (4) zur Kontaktierung der Leitung (6) eine in Längsrichtung in die Leitung (6) eindringende Kontaktspitze (12) aufweist.

6. Steckverbinder nach einem der Ansprüche 1 bis 5, **dadurch gekennzeichnet, daß** an dem den Kontaktelementen (4) zugewandten Ende einer Ausnehmung (7) eine an den Querschnitt der Leitung (6) angepaßte Vertiefung (14) vorgesehen ist.

7. Steckverbinder nach einem der Ansprüche 1 bis 6, **dadurch gekennzeichnet, daß** die Zugentlastungselemente (5) seitlich in in Leitungsanschlußrichtung verlaufende Montageausnehmungen (15) des Kontaktträgers (1) einlegbar sind und im montierten Zustand des Steckverbinders durch die Überwurfhülse (3) und die Leitungen (6) gesichert sind.

8. Steckverbinder nach einem der Ansprüche 1 bis 7, **dadurch gekennzeichnet, daß** die Kontaktelemente seitlich in in Leitungsanschlußrichtung verlaufende Montageausnehmungen (15) im Kontaktträger (1) einlegbar sind und im montierten Zustand des Steckverbinders durch die Überwurfhülse (3) gesichert sind.

9. Steckverbinder nach Anspruch 7 oder 8, **dadurch gekennzeichnet, daß** die Kontaktelemente (4) und/oder die Zugentlastungselemente (5) in Leitungsanschlußrichtung Anschlagflächen (17, 18) aufweisen und durch zugeordnete Anschlagflächen der jeweiligen Montageausnehmungen (15) des Kontaktträgers (1) in Leitungsanschlußrichtung gesichert sind.

10. Steckverbinder nach einem der Ansprüche 1 bis 9, **dadurch gekennzeichnet, daß** die jeweils einer Leitung (6) zugeordneten Kontaktelemente (4) und Zugentlastungselemente (5) einstückig ausgeführt sind.

## Claims

1. Connector having a cylindrical contact carrier (1), a connector sleeve (3) that can be screwed or pushed onto the contact carrier (1), at least one contact element (4) carried by the contact carrier (1) and at least one strain-relief element (5), the contact carrier (1) comprising at least one recess (7) running in the wire-connection direction to accommodate at least one wire (6), and the strain-relief element (5) being arranged on at least one of the longitudinal sides (8, 9) of the recess (7),
**characterized in that**
each strain-relief element (5) has at least one spike (11) projecting into the recess (7), penetrating at least into a sheathing (10) of a wire (6) introduced into the recess, and the connector sleeve (3) can be brought onto the contact carrier (1) from the end containing the contact element (4).

2. Connector according to Claim 1, **characterized in that** the strain-relief elements (5) each have a plurality of spikes (11) of increasing length in the direction in which the connector sleeve (3) is fitted.

3. Connector according to Claim 1 or 2, **characterized in that** at least some of the spikes (11) of the strain-relief elements (5) are undercut in the form of a barb against the direction of pull.

4. Connector according to any of Claims 1 to 3, **characterized in that** the strain-relief elements (5), for a cylindrical contact carrier (1), are arranged on a longitudinal side (8), facing the cylinder axis, of the respective recess (7).

5. Connector according to any of Claims 1 to 4, **characterized in that** the contact element (4) has a contact spike (12) penetrating into the wire (6) in the longitudinal direction for making contact with the wire (6).

6. Connector according to any of Claims 1 to 5, **characterized in that** an indentation (14) designed to fit the cross section of the wire (6) is provided at that end of a recess (7) facing the contact elements (4).

7. Connector according to any of Claims 1 to 6, **characterized in that** the strain-relief elements (5) can be inserted laterally into assembly recesses (15) of the contact carrier (1) that run in the wire-connection direction, and are secured by the connector sleeve (3) and the wires (6) in the assembled state of the connector.

8. Connector according to any of Claims 1 to 7, **characterized in that** the contact elements can be inserted laterally into the assembly recesses (15) in the contact carrier (1) that run in the wire-connection direction, and are secured by the connector sleeve (3) in the assembled state of the connector.

9. Connector according to Claim 7 or 8, **characterized in that** the contact elements (4) and/or the strain-relief elements (5) have stop surfaces (17, 18) in the wire-connection direction, and are secured in the wire-connection direction by assigned stop surfaces of the respective assembly recesses (15) of the contact carrier (1).

10. Connector according to any of Claims 1 to 9, **characterized in that** each of the contact elements (4) and strain-relief elements (5) assigned to a wire (6) is designed as a single part.

## Revendications

1. Connecteur, avec un porte-contact de forme cylindrique (1), avec une douille couvrante (3) à visser ou à glisser sur le porte-contact (1), avec au moins un élément de contact (4) porté par 1e porte-contact (1) et avec au moins un élément de relâchement de traction (5), dans lequel le porte-contact (1) présente au moins un évidement (7) orienté dans la direction de raccordement du conducteur destiné à recevoir au moins un conducteur (6), dans lequel l'élément de relâchement de traction (5) est disposé sur au moins un des côtés longitudinaux (8, 9) de l'évidement (7), **caractérisé en ce que** l'élément de relâchement de traction (5) comprend chaque fois au moins une pointe (11) pénétrant dans l'évidement (7) et s'enfonçant au moins dans une gaine (10) d'un conducteur (6) placé dans l'évidement, et la douille couvrante (3) peut être montée sur le porte-contact (1) du côté de l'élément de contact (4).

2. Connecteur selon la revendication 1, **caractérisé en ce que** les éléments de relâchement de traction (5) présentent chaque fois plusieurs pointes (11) de longueur croissante dans la direction de montage de la douille couvrante (3).

3. Connecteur selon la revendication 1 ou 2, **caractérisé en ce qu'**au moins une partie des pointes (11) des éléments de relâchement de traction (5) sont en contre-dépouille à 1a manière d'un crochet dans le sens contraire à la direction de traction.

4. Connecteur selon l'une quelconque des revendications 1 à 3, **caractérisé en ce que**, lorsque le porte-contact (1) est de forme cylindrique, les éléments de relâchement de traction (5) sont disposés sur un côté longitudinal (8) de l'évidement respectif (7), tourné vers l'axe du cylindre.

5. Connecteur selon l'une quelconque des revendications 1 à 4, **caractérisé en ce que** l'élément de contact (4) présente, pour le contact avec le conducteur (6), une pointe de contact (12) s'enfonçant en direction longitudinale dans le conducteur (6).

6. Connecteur selon l'une quelconque des revendications 1 à 5, **caractérisé en ce qu'**il est prévu, à l'extrémité d'un évidement (7) tournée vers les éléments de contact (4), un creux (14) adapté à la section transversale du conducteur (6).

7. Connecteur selon l'une quelconque des revendications 1 à 6, **caractérisé en ce que** les éléments de relâchement de traction (5) peuvent être posés latéralement dans des évidements de montage (15) du porte-contact (1) orientés dans la direction de raccordement du conducteur et sont fixés à l'état monté du connecteur par la douille couvrante (3) et les conducteurs (6).

8. Connecteur selon l'une quelconque des revendications 1 à 7, **caractérisé en ce que** les éléments de contact peuvent être posés latéralement dans des évidements de montage (15) dans le porte-contact (1) orientés dans la direction de raccordement du conducteur et sont fixés à l'état monté du connecteur par la douille couvrante (3).

9. Connecteur selon la revendication 7 ou 8, **caractérisé en ce que** les éléments de contact (4) et/ou les éléments de relâchement de traction (5) présentent des faces de butée (17, 18) dans la direction de raccordement du conducteur et sont fixés dans la direction de raccordement du conducteur par des faces de butée associées des évidements de montage respectifs (15) du porte-contact (1).

10. Connecteur selon l'une quelconque des revendications 1 à 9, **caractérisé en ce que** les éléments de contact (4) et les éléments de relâchement de traction (5) respectivement associés à un conducteur (6) sont réalisés en une seule pièce.
